Europäisches Patentamt

European Patent Office

Office européen des brevets

(19)

(11) Publication number: 0 248 407
A2

(12) **EUROPEAN PATENT APPLICATION**

(21) Application number: 87107973.7

(22) Date of filing: 02.06.87

(51) Int. Cl.⁴: G08G 5/06

(30) Priority: 02.06.86 JP 128548/86

(43) Date of publication of application:
09.12.87 Bulletin 87/50

(84) Designated Contracting States:
AT BE CH DE ES FR GR IT LI LU NL SE

(71) Applicant: OMRON TATEISI ELECTRONICS
CO.
10, Tsuchido-cho Hanazono Ukyo-ku
Kyoto-shi Kyoto-fu(JP)

(72) Inventor: Matsudaira, Hidetoshi
6-3 Nishikura-cho Ashiya-shi
Hyogo-ken(JP)
Inventor: Kanayama, Kenji c/o OMRON
TATEISI ELECTRONICS CO.
20, Igadera, Shimo-Kaiinji
Nagaokakyo-City Kyoto 617(JP)
Inventor: Mizuno, Masao c/o OMRON TATEISI
ELECTRONICS CO.
20, Igadera, Shimo-Kaiinji
Nagaokakyo-City Kyoto 617(JP)

(74) Representative: WILHELMS, KILIAN &
PARTNER Patentanwälte
Eduard-Schmid-Strasse 2
D-8000 München 90(DE)

(54) Airplane sensing apparatus.

(57) Transmitting coils TC and receiving coils RC are arranged opposite to each other along a guidance course (2) in a taxiway (1) of an airplane at predetermined intervals. When the airplane passes between a transmitting coil (TC) and a receiving coil (RC), the value of the current flowing through the receiving coil (RC1) changes by a mutual induction. The change is electrically detected, so that the position of the airplane is detected.

FIG.2

## Airplane Sensing Apparatus

The present invention relates to an airplane sensing apparatus and more particularly, to an airplane sensing apparatus for sensing the present position of an airplane which approaches a guidance course.

Conventionally, the following apparatus has been known for electromagnetically sensing the present position of an airplane on an guidance course when the airplane is guided along a predetermined guidance course in, for example, an airfield.

More specifically, an apparatus has been known in which a lot of loop coils are embedded along the guidance course at predetermined intervals. A high frequency current is applied to each of the loop coils. Any changes in the current flowing through each of the loop coils are monitored, and it is sensed that a nose-wheel of the airplane is located at a loop coil whose current change exceeds a predetermined level. This apparatus utilizes the principle that self-inductance of the loop coils changes when the nose-wheel of the airplane passes the loop coils.

However, the conventional apparatus has the following problems.

(1) The loop coil requires the size of about 2m x 1m so as to obtain rated sensitivity. In order to embed such large loop coils in a taxiway, the taxiway must be dug over a large area. Therefore, the digging work is large-scaled requiring high construction cost and much time for the work.

(2) Since the accuracy of sensing an airplane is dependent on the longitudinal length of the loop coil, high accuracy can not be obtained in the conventional sensing apparatus which requires large loop coil as described above.

(3) Since the loop coils embedded in the taxiway receive heavy loads when the airplane passes thereon, the coils are often broken, disabling the sensing of the airplane.

(4) If the loop coils are broken, the broken loop coils must be dug out and repaired. Therefore, the repairing work is large-scaled, requiring high repair cost and much time for the repair.

(5) Since all the loop coils must be connected to a main body (which comprises a high-frequency oscillator, a current change detector or the like), at least one cable must be connected to each of the loop coils. Therefore, when the number of loop coils increases, the number of cables increases. Therefore, the price of the apparatus becomes high and the laying work of the cables is time-consuming.

SUMMARY OF THE INVENTION

It is an object of the present invention is to provide an airplane sensing apparatus whcih can be easily installed and maintained at a low cost.

It is another object of the present invention to provide an airplane sensing apparatus whose loop coils are durable under heavy loads.

It is still another object of the present to provide an airplane sensing apparatus that has a high sensing accuracy.

According to this invention, there is provided an airplane sensing apparatus comprising a plurality of transmitting coils arranged on a taxiway at predetermined intervals for generating an alternating magnetic field; a plurality of receiving coils arranged opposite to the transmitting coils for generating an induced voltage by a mutual induction therebetween; exciting means for exciting the transmitting coils; and position detecting means responsive to the change in the voltage induced in the receiving coils for detecting the position of the airplane on the taxiway.

BRIEF DESCRIPTION OF THE DRAWINGS

Fig. 1 is a cross sectional view of a taxiway;

Fig. 2 is a plan view of Fig. 1;

Figs. 3A and 3B show circuit configurations of a transmitting coil and a receiving coil, respectively;

Fig. 4 is a schematic block diagram showing a main body for controlling the transmitting coil and the receiving coil and detecting the position of an airplane;

Fig. 5 is a timing chart of transmission signals, reception signals and control signals;

Fig. 6 is a timing chart of control signals, reception singals, and transmission signals;

Figs. 7A is a flow chart for explaining the initial process by a CPU 20 shown in Fig. 4; and

Fig. 7B is a flow chart for explaining the main process by the CPU 20 shown in Fig. 4

DESCRIPTION OF THE PREFERRED EMBODIMENTS

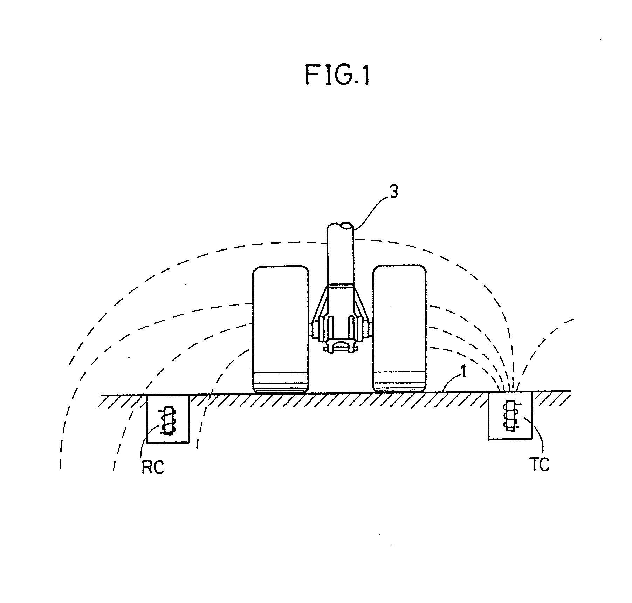

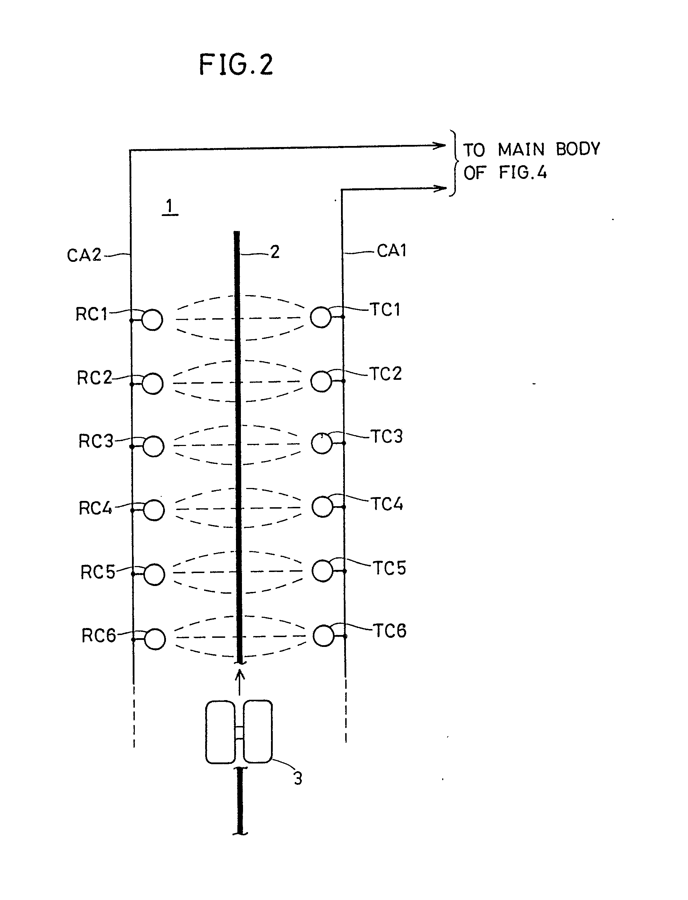

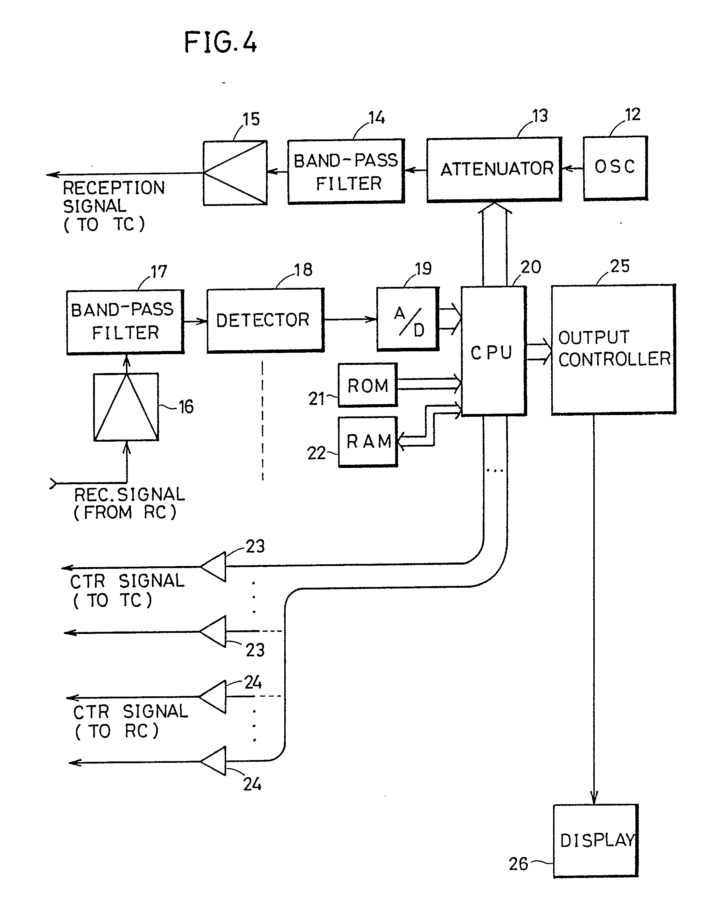

In Figs. 1 and 2, a plurality of transmitting coils TC (TC1 to TC6 in Fig. 2) are arranged in a taxiway 1 in parallel with a guidance course 2 of an airplane at predetermined intervals. The transmitting coils TC are connected to a main body (see Fig. 4) through a single cable CA1. The cable CA1 includes a power supply line, a transmission signal line and a control signal line. On the other hand, a plurality of receiving coils RC (RC1 to RC6 in Fig. 2) are arranged on the opposite side of the guidance course. The receiving coils RC1 to RC6 are opposite to the transmitting coils TC1 to TC6, respectively. All the receiving coils RC are connected to the main body (see Fig. 4) through a single cable CA2. The cable CA2 includes a power supply line, a transmission signal line and a control signal line. The transmitting coils TC and the receiving coils RC may be embedded in the taxiway 1 as shown in Fig. 1, or may be provided on the surface of the taxiway 1.

In the above described structure, all the transmitting coils TC are excited by the main body, so that an alternating magnetic field is generated. The alternating magnetic field causes a mutual induction between the transmitting coils TC and the receiving coils RC, so that a voltage is induced in each of the receiving coils RC. When a nose-wheel 3 of an airplane passes along the guidance course 2, the above described alternating field is affected by an axle (which is made of a metal material) of the nose-wheel 3, so that mutual inductance changes between the transmitting coils TC and the receiving coils RC. Therefore, when the nose-wheel 3 is located between a transmitting coil TC and a receiving coil RC, the level of a reception signal in the receiving coil RC changes. The main body detects the change in the reception signal level and senses the present position of the nose-wheel 3.

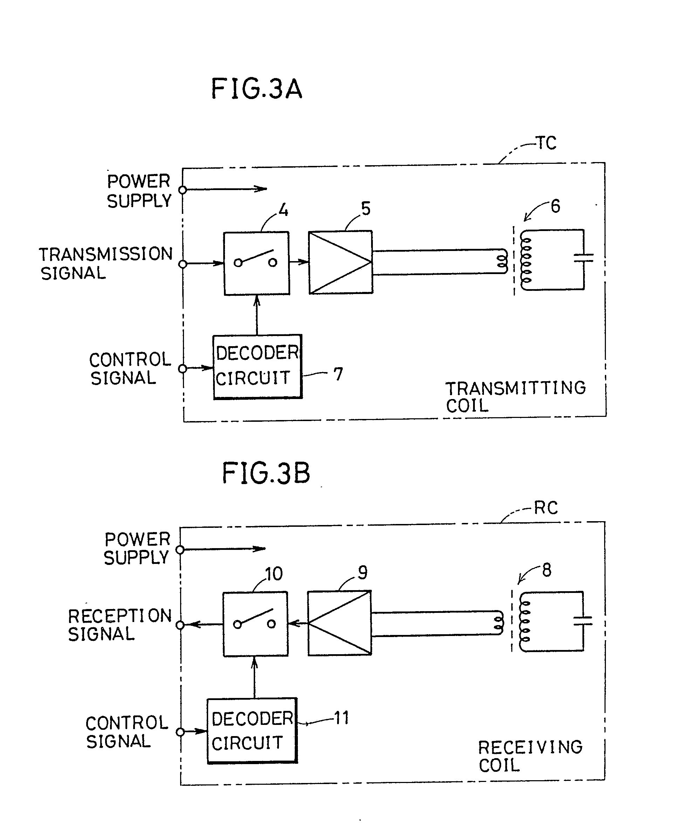

In Fig. 3A, the transmitting coil TC is supplied with electric power, a transmission signal and a control signal from the main body through the cable CA1 shown in Fig. 2. The transmission signal is an alternating current signal with a constant period and the control signal is an address signal comprising a plurality of bits. The inputted transmission signal is applied to a power amplifier circuit 5 through a switching circuit 4 and amplified therein. An output signal from the power amplifier circuit 5 is applied to a ferrite coil 6. Because the ferrite coil 6 is tuned to the transmission signal, so that an alternating magnetic field is generated when a current flows through the ferrite coil 6. On the other hand, the control signal is applied to a decoder circuit 7. The decoder circuit 7 decodes the control signal and determines whether or not the control signal coincides with a preset address. When the decoder circuit 7 identifies the coincidence, the switching circuit 4 is closed, so that the inputted transmission signal is applied to the power amplifier circuit 5. When the decoder circuit 7 does not detect the coincidence, the switching circuit 4 is kept open.

In Fig. 3B, the power supply and the control signal are applied from the main body to the receiving coil RC through the cable CA2 shown in Fig. 2. In the receiving coil RC, the alternating field generated by the transmitting coil TC is received by a ferrite coil 8, the received alternating field is converted into a voltage, and the voltage is amplified by an amplifier circuit 9. The amplified reception signal is applied to the cable CA2 through the switching circuit 10 and sent to the main body. A decoder circuit 11 controls the switching circuit 10 in response to the control signal transmitted from the main body. More specifically, when the control signal coincides with a preset address, the decoder circuit 11 closes the switching circuit 10.

In Fig. 4, an alternating signal generated in an oscillation circuit 12 is applied to a band-pass filter 14 through an attenuator 13, so that only a fundamental wave component is extracted. An output from the band-pass filter 14 is amplified by an amplifier circuit 15, and the amplified output is applied to the transmitting coils TC through the cable CA1. On the other hand, the reception signal from the receiving coils RC is applied to an amplifier circuit 16 through the cable CA2 . The reception signal amplified by the amplifier circuit 16, whose noise is removed by a band-pass filter 17, is detected by a detector 18 and applied to an analog-to-digital (A/D) converter 19. The signal converted into a digital signal by the A/D converter 19 is applied to a central processing unit (CPU) 20.

Connected to the CPU 20 are a read only memory (ROM) 21 for storing program data and a random access memory (RAM) 22 for storing various data, so that so-called a microcomputer is constituted. The CPU 20 transmits a control signal of bits to the transmitting coils TC through buffer circuits 23 and to the receiving coils RC through buffer circuits 24. In addition, the CPU 20 controls the degree of attenuation of the attenuator 13 and controls the output level of the transmission signal. Furthermore, the CPU 20 is connected to a display 26 through an output controller 25. The display 26, which displays the present position of the airplane, is attached to, for example, the wall surface of an airport building.

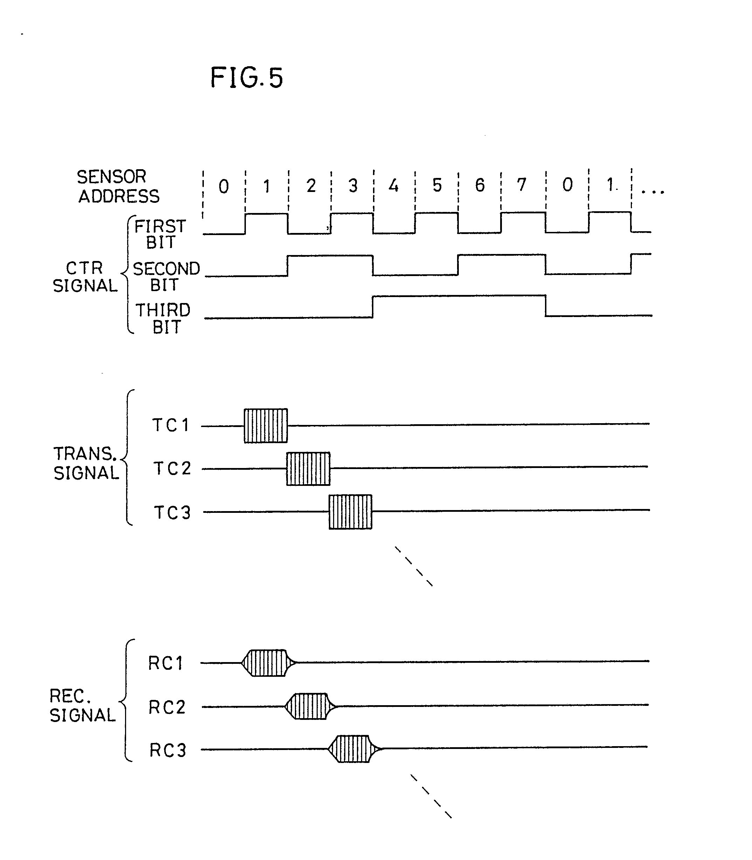

As shown in Fig. 5, the control signal comprises, for example, three bits. The three bits specify an address for a sensor (of a transmitting coil and a receiving coil). In a transmitting coil TC, if a sensor address of the control signal coincides with the preset address of the coil, an alternating field is generated from the ferrite coil 6. As shown in Fig. 5, the sensor address is sequentially updated, so that the transmitting coils TC1, TC2,... are sequentially driven. On the other hand, in the receiving coil RC opposite to the transmitting coil TC which generates a magnetic field, a voltage is induced in the ferrite coil 8 by a mutual induction. The induced voltage is read out as a reception signal when the address of the control signal coincides with that of a receiving coil.

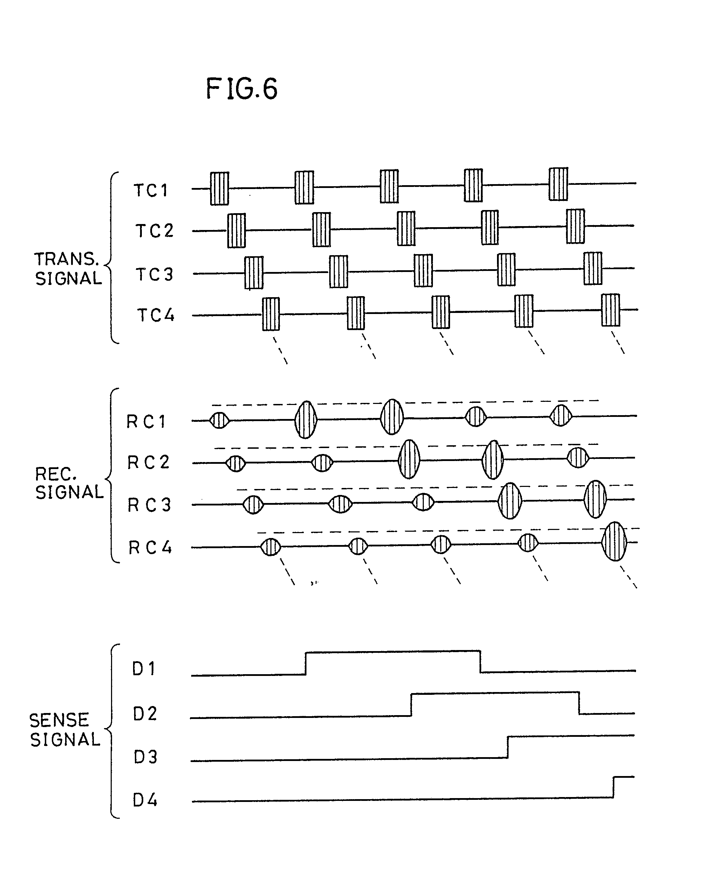

In Fig. 6, a signal induced in the receiving coil RC1 gradually increases when the nose-wheel of the airplane approaches, and a sense signal D1 is outputted from the CPU 20 at the time when the signal exceeds the threshold level shown by a dotted line. Reception signals in the receiving coils RC2, RC3 and RC4 gradually increase, and sense signals D2, D3 and D4 are outputted at the time when the reception signals exceed the threshold level.

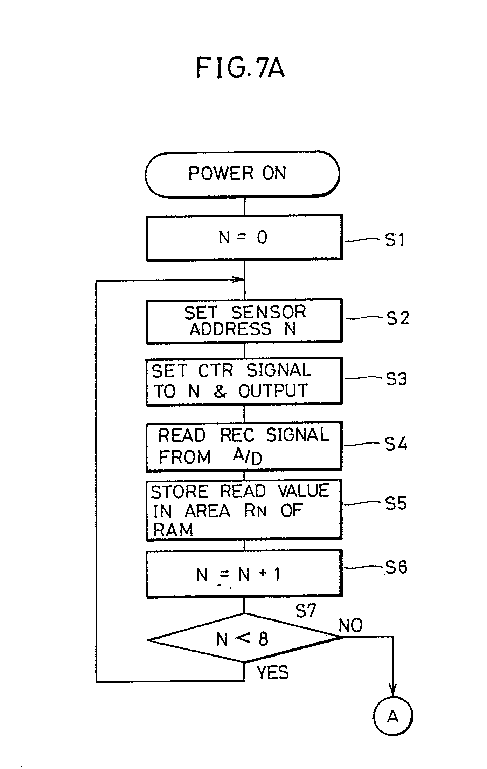

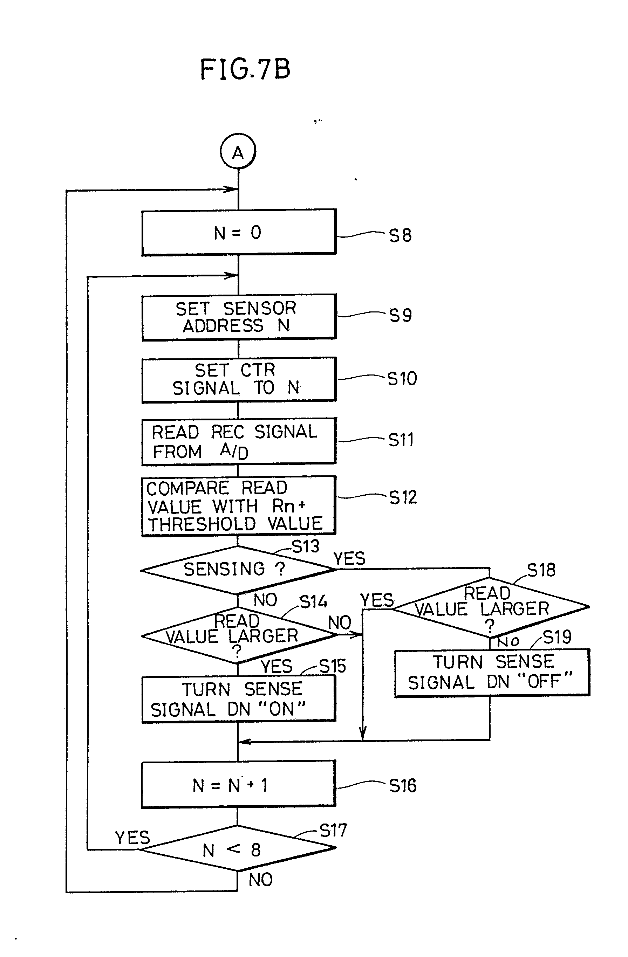

Referring now to Figs. 7A and 7B, description is made on operation of an airplane sensing apparatus as an embodiment of the present invention.

First of all, the initial process shown in Fig. 7A will be described hereinafter. When the power supply is turned on, a variable N for a sensor address number is initialized to 0 in the step S1, and the sensor address N is set (that is, the 0th sensor address is designated) in the step S2. Then, the program proceeds to the step S3, where the logical value of each bit of the control signal is controlled to set the control signal to a sensor address N (0 in this case), and outputted to the transmitting coils TC and the receiving coils RC through the buffer circuits 23 and 24, respectively. As a result, an alternating field is generated from the Nth (0th in this case) transmitting coil TCn. Accordingly, a voltage is induced in a receiving coil RCn opposite to the transmitting coil TCn by the mutual induction. The induced voltage is transmitted to the main body shown in Fig. 4 as a reception signal. Thus, a digital signal based on the reception signal in the receiving coil RCn is outputted from the A/D converter 19. The reception signal outputted from the A/D converter 19 is inputted in the CPU 20 in the step S4. The reception signal is then loaded into an area Rn of the RAM 22 (an area corresponding to the sensor address N) as an initial value in the step S5. Then, the program proceeds to the step S6, where the sensor address N is incremented. In the step S7, it is checked whether or not the sensor address N exceeds 8. If the sensor address N is less than 8, the program returns to the step S2. Thereafter, the operations in the steps S2 to S6 are repeated until the sensor address N becomes equal to 8. By the foregoing operation, the initial value of the reception level (which is the reception level when the airplane does not exist) of the eight receiving coils RC are set. Although in the present embodiment, the eight pairs of transmitting coils and receiving coils are used, more than eight pairs of transmitting coils and receiving coils can be used if the number of bits of the control signal is increased. However, if too many transmitting coils and receiving coils are specified by a single control signal, the operation speed is lowered. Thus, the transmitting coils and the receiving coils are divided into some groups so that the transmitting coils and the receiving coils in each group can be specified by separate control signals.

When the initial values of the reception level of all the receiving coils are set, the program proceeds to the main process shown in Fig. 7B.

In the main process, a variable N for a sensor address is set to 0 in the step S8, and the sensor address is set to N in the step S9. Thus, at the time when the program proceeds to the msin process, the sensor address N equals 0. Then, the program proceeds to the step S10, where the logical values of all the bits of the control signal is controlled such that the control signal can designate the sensor address N and are outputted to the transmitting coils TC and the receiving coils RC. Thus, an alternating magnetic field is generated from the Nth (0th in the first execution) transmitting coil TCn and received by the receiving coil RCn opposite thereto, as in Fig. 7A. The reception signal is inputted from the A/D converter 19 into the CPU 20 in the step S11. Then, the program proceeds to the step S12, where the value inputted into the CPU 20 in the step S11 is compared with the total value of the initial value stored in the area Rn of the RAM 22 and the threshold value (which is a constant value with respect to all the receiving coils and previously set). The sum of the two values equals the threshold level shown by the dotted line in Fig. 6. Then, the program proceeds to the step S13, where it is checked whether or not the receiving coil RCn which is now in question is sensing the airplane. More specifically, when the sense signal Dn of the sense signals outputted from the CPU 20 is high, it is determined that sensing is performed. If it is determined that sensing is not performed, that is, when the sense signal Dn is low, the program proceeds to the step S14, where it is determined whether or not the inputted value in step 11 is larger than the Rn + the threshold value. If the inputted value is larger, it is determined that the receiving coil RCn is in the sensing state of the airplane, so that the sense signal Dn is set high in the step S15. The sense signal Dn is outputted to the output controller 25 and stored in a predetermined area thereof. On the other hand, if the inputted value is equal or smaller, the sense signal Dn may remain low, so that the step S15 is skipped to the step S16. In the step S16, the sensor address N is incremented. Thereafter, the program proceeds to the step S17, where it is checked whether or not the sensor address N is smaller than 8. If the sensor address N is smaller than 8, the program returns to the step S9.

On the other hand, if it is determined that sensing is performed, that is, when the sense signal Dn has been already high in the step S13, the program proceeds to the step S18, where it is checked whether or not the comparison in the step 12 shows the inputted value is larger than the sum of the value in the Rn and the threshold value. If the inputted value is larger, the sense signal Dn must be turned high. However, since the sense signal Dn has been already turned high, the program proceeds to the step S16 without turning the sense signal Dn high. On the other hand, if the inputted value is equal or smaller, the receiving coil RCn does not sense the passage of the airplane, so that the sense signal Dn is turned low in the step S19. Thereafter, the program proceeds to the step S16.

The above described sequence of operations (the steps S9-S19) are repeated until the sensor address N becomes equal to 8. Thus, the 0th to 7th transmitting coils and the 0th to 7th receiving coils are sequentially scanned. When the checks are completed for all pairs of the transmitting and receiving coils, the sensor address N equals 8. When it is determined that the sensor address N equals 8 in the step S17, the program returns to the step S8. Thus, the checks are repeated from the 0th transmitting coil and receiving coil.

Since the output controller 25 stores the states of all the sense signals outputted from the CPU 20, the positions of the airplane is known by reading out the contents stored in the output controller 25. The display 26 periodically reads out the contents stored in the output controller 25 and displays the positions of the airplane.

In this embodiment, because the initial value of a receiving coil RC is determined according to the reception characteristic of the receiving coil RC, the reception signal level of the receiving coil RC can be independently checked for high detection accuracy.

In addition, although in the above described embodiment, the reception signal is checked by sequentially scanning the transmitting coils TC and the receiving coils RC to sense the positions of the airplane, the positions of the airplane may be detected by driving all the transmitting coils TC and the receiving coils RC at a time. In this case, however, if all the transmitting coils TC are operated at a time with only one cable CA1 and all the receiving coils RC with CA2, the sensor address cannot be specified for the sensing of the position of the airplane. Therefore, all the transmitting and receiving coils must have their own cables.

As described in the foregoing, according to the present invention, the following specific effects are achieved.

(1) Since the transmitting coils and the receiving coils are much smaller than the conventional loop coils, the digging work before embedding the transmitting coils and the receiving coils in the taxiway can be extremely simplified. In addition, in order to sense the airplane, the transmitting coils and the receiving coils need not be necessarily embedded but may be installed on the taxiway. In this case, the work can be further simplified.

(2) Since the conventionally large-scaled work is not required for maintenance, maintenance can be done with great ease.

(3) Since the transmitting coils and the receiving coil are small-sized, sensing is possible with high resolution and high accuracy by decreasing the intervals at which the transmitting coils and the receiving coils are installed.

(4) Since the transmitting coils and the receiving coils need not be embedded in the guidance course on which the nose-wheel of the airplane passes, a heavy load of the airplane is not applied to the coils, dramatically reducing the possibility of the coils to be broken.

Although the present invention has been described and illustrated in detail, it is clearly understood that the same is by way of illustration and example only and is not to be taken by way of limitation, the scope of the present invention being limited only by the terms of the appended claims.

**Claims**

1. An airplane sensing apparatus for sensing a position of an airplane on a guidance course of a taxiway, comprising:
a plurality of transmitting coils arranged on said taxiway at predetermined intervals for generating an alternating magnetic field;
a plurality of receiving coils arranged opposite to said transmitting coils for generating an induced voltage by a mutual induction therebetween;
exciting means for exciting said transmitting coils; and
position detecting means responsive to the change in the voltage induced in said receiving coils for detecting the position of the airplane on said guidance course.

2. An airplane sensing apparatus in accordance with claim 1, wherein
said transmitting coils and said receiving coils are embedded in said taxiway.

3 An airplane sensing apparatus in accordance with claim1, wherein
said exciting means excites selectively each of said transmitting coils, and
said position detecting means is responsive to the induced voltages of said receiving coils corresponding to the transmitting coils currently excited for detecting the position of the airplane.

4. An airplane sensing apparatus in accordance with claim 1, wherein

said position detecting means comprises

setting means for setting the induced voltages of said receiving coils when the airplane does not exist on said guidance course, and

comparing and detecting means for comparing the induced voltages of said receiving coils with the voltage set in said setting means and detecting the position of the airplane.

5. An airplane sensing apparatus in accordance with claim 3, wherein

said position detecting means comprises

setting means for setting the induced voltages of said receiving coils when the airplane does not exist on said guidance course, and

comparing and detecting means for comparing the induced voltages of said receiving coils with the voltage set in said setting means and detecting the position of the airplane.

6. An airplane sensing apparatus in accordance with claim 1, further comprising:

a display for displaying the detected portion of said airplane.

# FIG.1

# FIG.2

## FIG.3A

TC

POWER
SUPPLY

TRANSMISSION
SIGNAL

4    5    6

CONTROL
SIGNAL

DECODER
CIRCUIT    7

TRANSMITTING
COIL

## FIG.3B

RC

POWER
SUPPLY

RECEPTION
SIGNAL

10    9    8

CONTROL
SIGNAL

DECODER
CIRCUIT    11

RECEIVING
COIL

# FIG.4

# FIG.5

SENSOR ADDRESS

0 | 1 | 2 | 3 | 4 | 5 | 6 | 7 | 0 | 1. | ...

CTR SIGNAL
- FIRST BIT
- SECOND BIT
- THIRD BIT

TRANS. SIGNAL
- TC1
- TC2
- TC3

REC. SIGNAL
- RC1
- RC2
- RC3

# FIG.6

TRANS. SIGNAL

TC1

TC2

TC3

TC4

REC. SIGNAL

RC1

RC2

RC3

RC4

SENSE SIGNAL

D1

D2

D3

D4

# FIG.7A

```
        ┌─────────────────┐
        │    POWER ON      │
        └─────────────────┘
                 │
        ┌─────────────────┐
        │     N = 0        │── S1
        └─────────────────┘
                 │
     ┌──────────►│
     │  ┌─────────────────┐
     │  │  SET  SENSOR     │── S2
     │  │  ADDRESS  N      │
     │  └─────────────────┘
     │           │
     │  ┌─────────────────┐
     │  │  SET CTR SIGNAL  │── S3
     │  │  TO N & OUTPUT   │
     │  └─────────────────┘
     │           │
     │  ┌─────────────────┐
     │  │ READ  REC SIGNAL │── S4
     │  │ FROM   A/D       │
     │  └─────────────────┘
     │           │
     │  ┌─────────────────┐
     │  │STORE READ VALUE  │── S5
     │  │IN AREA Rn OF     │
     │  │RAM               │
     │  └─────────────────┘
     │           │
     │  ┌─────────────────┐
     │  │   N = N + 1      │── S6
     │  └─────────────────┘
     │           │        S7
     │        ◇───────────◇  NO
     │       ◇   N < 8     ◇─────┐
     │        ◇───────────◇      │
     │           │ YES           │
     └───────────┘             ( A )
```

# FIG.7B

A

N = 0 — S8

SET SENSOR
ADDRESS N — S9

SET CTR
SIGNAL TO N — S10

READ REC SIGNAL
FROM A/D — S11

COMPARE READ
VALUE WITH Rn +
THRESHOLD VALUE — S12

S13
SENSING ? — YES

NO — S14
READ
VALUE LARGER
? — NO

YES — S18
READ
VALUE LARGER
? — No — S19

TURN SENSE
SIGNAL DN "OFF"

YES — S15
TURN SENSE
SIGNAL DN "ON"

YES

N = N + 1 — S16

YES — S17
N < 8

NO